# FASCICULE DE BREVET EUROPEEN

(11) **EP 3 307 462 B1**
(45) Date de publication et mention de la délivrance du brevet: **08.12.2021**
(21) Numéro de dépôt: 16731335.2
(22) Date de dépôt: 09.06.2016
(51) Int. Cl.: B23B 7/06, B23B 13/02, G04D 1/00

(54) **TOUR D'USINAGE ET CANON DE GUIDAGE**
DREHMASCHINE UND FÜHRUNGSBUCHSE
LATHE AND GUIDE BUSHING

(30) Priorité: 11.06.2015 CH 8332015
(43) Date de publication de la demande: 18.04.2018
(73) Titulaire: LDI Finances, 74300 Thyez (FR)
(72) Inventeur: JACOT, Philippe, 2022 Bevaix (CH); LAPORTE, Sébastien, 74300 Thyez (FR)
(74) Mandataire: P&TS SA (AG, Ltd.)
(86) Numéro de dépôt international: PCT/IB2016/053385
(87) Numéro de publication internationale: WO 2016/199047

(56) Documents cités:
- EP-A1- 1 698 416
- EP-A1- 1 704 950
- CH-A- 408 591

## Description

### Domaine technique

La présente invention concerne un canon de guidage et un tour d'usinage comprenant un canon de guidage ayant une pince ou un mécanisme de serrage.

### Etat de la technique

Le tour est une machine-outil permettant un usinage de pièces mécaniques par enlèvement de copeaux.

Il existe une large gamme de tours et d'équipement de tours, chacun envisageant et convenant à un éventail d'opérations d'usinage distinctes.

Le document EP0463433 décrit un tour équipé d'un canon de guidage fixé au bâti et arrangé pour ajuster son diamètre interne afin de fournir un serrage variable de la barre, à partir d'un serrage faible pour un usinage de précision, jusqu'à un serrage fort pour permettre des opérations impliquant de grandes pressions, par exemple lors du moletage, lorsqu'une avance n'est pas nécessaire.

Le document CH408591 dévoile un tour automatique selon le préambule de la revendication comprenant un canon de guidage et une pince de serrage fixés au bâti et une poupée mobile. Le tour automatique comprend des moyens pour permettre une opération d'avancement de la barre en temps masqué en retenant la barre par la pince fixée au bâti tout en reculant la poupée mobile en mode desserrée.

Le document JP61103705 décrit un tour pour l'usinage de pièces longues et de petits diamètres qui comprend un charriot déplaçable le long de l'axe de rotation de la pièce et supportant un canon de guidage et l'outil d'usinage.

Les documents EP1698416 et EP1704950 concernent un tour automatique qui est capable de passer d'un mode d'usinage de la matière avec une douille de guidage à un mode d'usinage de la matière sans la douille de guidage. Ces documents divulguent un canon de guidage pour tour d'usinage selon le préambule de la revendication 21.

Ces tours montrent un intérêt et un effort de conceptions afin de proposer des tours offrant des meilleures prestations d'usinage à disposition de l'opérateur.

Actuellement il y a un intérêt croissant du marché pour un tour automatique ou semi-automatique polyvalent dont la conception permet une grande souplesse au niveau de l'éventail d'opérations d'usinage ainsi que sur la typologie des pièces à usiner, tout en garantissant une efficacité et une efficience d'usinage élevées.

### Bref résumé de l'invention

Un but de la présente invention est de proposer un tour polyvalent qui permet un plus large éventail d'opérations d'usinage par rapport à l'état de la technique.

Un autre but de l'invention est de proposer un tour permettant un usinage de différentes typologies de pièces à usiner, notamment de pièces ayant un rapport longueur/diamètre très important, par exemple supérieure à 4.

Un autre but de l'invention est de proposer un tour offrant un usinage efficient de pièces en petites et grandes séries.

Selon l'invention, ces buts sont atteints notamment au moyen d'un tour d'usinage selon la revendication comprenant:
une poupée mobile arrangée pour une rotation et une translation d'une pièce à usiner par rapport à un axe de translation et de rotation;
un canon de guidage arrangé pour être fixé à un bâti du tour et comprenant une broche de canon et une pince ou mécanisme de serrage; le canon de guidage étant arrangé pour opérer soit en mode canon, soit en mode pince ;
caractérisé en ce que
le canon de guidage est arrangé pour être mobile axialement par rapport au bâti selon ledit axe de translation et de rotation;
le tour est arrangé pour opérer dans un premier mode dans lequel le canon de guidage est entrainé axialement par la poupée mobile ; et
le tour est arrangé pour opérer dans un deuxième mode dans lequel la position axiale du canon de guidage par rapport au bâti est fixe.

Selon l'invention, le terme poupée mobile se réfère à une broche arrangée pour retenir une portion d'une pièce à usiner ainsi que pour la mettre en rotation et pour la translater axialement par rapport à un axe de rotation et de translation.

Selon l'invention, les termes axiale et radiale se réfèrent à l'axe de rotation et de translation de la pièce. Cette terminologie est utilisée le long de la description, pour faciliter sa lecture.

Selon l'invention, le terme canon de guidage se réfère à un support permettant un guidage d'une portion d'extrémité d'une pièce à usiner, support qui est positionné de façon espacée de la poupée mobile sur l'axe de rotation (axe d'avancement de la pièce d'usiner).

Selon l'invention, le terme broche de canon se réfère à une broche arrangée pour guider axialement une portion d'une pièce à usiner ainsi que pour la retenir radialement par rapport à un axe de rotation et de translation de la pièce à usiner, tout en pouvant effectuer un mouvement de rotation.

Selon l'invention, le terme pince ou mécanisme de serrage se réfère à tout élément ou portion d'élément activable/désactivable destiné à opérer sur une pièce de façon à empêcher tout mouvement relatif de la pièce par rapport audit élément ou portion d'élément.

Selon un mode de réalisation, la pince ou mécanisme de serrage du canon est positionnée de façon coaxiale par rapport à la broche de canon.

Selon un mode de réalisation, la pince ou mécanisme de serrage du canon est arrangé pour opérer dans une cavité ou dans un passage interne de la broche de canon.

Selon l'invention, par l'expression « le canon de guidage opérant en mode canon » on entend le canon opérant avec la pince ou mécanisme de serrage desserré de façon à ce que la pièce à usiner est libre de se déplacer axialement par rapport au canon de guidage pendant que sa portion d'extrémité libre est supportée et/ou guidée par la broche de canon.

Selon l'invention, par l'expression « le canon de guidage opérant en mode pince » on entend le canon opérant avec la pince ou mécanisme de serrage serré autour d'une portion d'une pièce à usiner de façon à empêcher une translation axiale de la pièce par rapport au canon de guidage.

La pièce à usiner peut avoir une forme de barre d'alimentation.

Cette solution présente notamment l'avantage par rapport à l'art antérieur de proposer un tour d'usinage offrant l'ensemble des avantages des systèmes suivants :
- un tour à canon de guidage fixe par rapport au bâti, notamment avec un dispositif d'alimentation en barre ;
- un tour à pince de serrage mobile axialement par rapport au bâti ; et
- un tour à poupée mobile (ou décolleteuse).

Cette solution présente notamment l'avantage par rapport à l'art antérieur de proposer un tour d'usinage permettant d'exécuter:
- un usinage en mode canon de guidage, notamment avec avancement continu de la pièce à usiner, notamment avec un mouvement de recul de la poupée mobile effectuable en temps masqué;
- un usinage de précision en retenant une extrémité de la pièce à usiner proche de la zone d'usinage, notamment avec un déplacement axial de la pièce à usiner.

Cette solution présente notamment l'avantage par rapport à l'art antérieur de pouvoir changer, de manière automatique ou semi-automatique, de mode d'usinage pendant l'exécution d'un usinage d'une pièce, sans devoir procéder à un remplacement, à une insertion ou à une substitution de composants du tour. Selon la typologie de l'usinage, le changement de mode d'usinage peut s'effectuer, avantageusement, en temps masqué.

Selon un mode de réalisation, le canon de guidage est motorisé.

Selon un mode de réalisation, l'ensemble ou au moins une partie du canon de guidage comprenant la broche de canon et/ou la pince ou mécanisme de serrage du canon est amovible du bâti. De préférence, l'ensemble ou cette partie du canon de guidage est amovible axialement selon l'axe de rotation et de translation de la pièce. Avantageusement, l'ensemble ou cette partie du canon de guidage est amovible du côté du bâti qui est tourné vers la zone d'usinage, c'est-à-dire vers la position de travail de l'outil ou des outils du tour.

Cette solution présente notamment l'avantage par rapport à l'art antérieur d'offrir non seulement un changement ou remplacement rapide et aisé de la broche de canon et/ou la pince ou mécanisme de serrage en cas de panne ou de maintenance, mais aussi de permettre un changement de ces composants en fonction du type d'usinage et/ou de la typologie des pièces à usiner. Par exemple, la broche de canon et/ou la pince ou mécanisme de serrage du canon peuvent être choisis parmi un éventail de broches/pinces répondant à des exigences spécifiques d'un usinage particulier, par exemple répondant à des exigences de tailles des pièces (diamètres, longueurs) ou répondant à des exigences découlant du matériau usiné (rigidité, poids spécifique, élasticité).

Cette solution présente en outre l'avantage par rapport à l'art antérieur de pouvoir réaffecter un tour à la production d'une série particulière de pièces par le simple montage du canon de guidage ou de la broche de canon et/ou de la pince qui est associé(e) à la production de cette série. Cet avantage est notamment remarquable lorsque le lieu de production comprend une pluralité de tours répartis sur plusieurs sites géographiquement éloignés. Dans ce cas, le simple transport du canon de guidage d'un tour à l'autre, respectivement d'un site à l'autre, permet la continuation ou la reprise de la production de la série de pièces.

Selon un mode de réalisation, le tour comprend un fourreau entourant radialement et au moins partiellement la broche de canon et/ou la pince ou mécanisme de serrage. Le fourreau est arrangé pour être relié au bâti par une liaison permettant sa translation axiale par rapport au bâti. Selon un mode de réalisation la liaison est une liaison glissière. Selon un autre mode de réalisation, la liaison est une liaison pivot glissant.

Cette solution présente notamment l'avantage par rapport à l'art antérieur de pouvoir réaliser un canon de guidage compact, transportable et amovible.

Selon un mode de réalisation particulièrement avantageux, le tour comprenant un premier dispositif de couplage ;
le premier dispositif de couplage étant embrayable/débrayable et opérant entre le canon de guidage et la poupée mobile ; et
le premier dispositif de couplage étant arrangé pour coupler axialement le canon de guidage et la poupée mobile selon l'axe de translation et de rotation de la pièce.

Selon un mode de réalisation avantageux, le premier dispositif de couplage opère entre une portion d'extrémité du fourreau du canon et une portion d'extrémité de la poupée mobile.

Selon un mode de réalisation avantageux, le premier dispositif de couplage est arrangé pour maintenir la distance entre le fourreau du canon et la poupée mobile constante pendant les déplacements axiaux et égale à la distance entre le fourreau du canon et la poupée mobile au moment du couplage.

Cette solution présente notamment l'avantage par rapport à l'art antérieur de proposer un tour d'usinage dont la broche de canon et la pince ou mécanisme de serrage du canon sont arrangées pour être entrainées axialement par la poupée mobile, tout en maintenant constante la distance relative entre ces éléments et égale à la distance au moment du couplage.

Selon un mode de réalisation avantageux, le tour comprend un deuxième dispositif de couplage ;
le deuxième dispositif de couplage étant embrayable/débrayable et opérant entre le canon de guidage et le bâti;
le deuxième dispositif de couplage étant arrangé pour fixer axialement la position du canon de guidage par rapport au bâtit selon ledit axe de translation et de rotation.

Selon un mode de réalisation avantageux, le deuxième dispositif de couplage opère radialement sur une surface du fourreau du canon de façon à fixer le positionnement axial du fourreau par rapport au bâti.

Cette solution présente notamment l'avantage par rapport à l'art antérieur de proposer un tour d'usinage dont la broche de canon et la pince ou mécanisme de serrage du canon peuvent être fixés par rapport au bâti à une distance relative qui peut varier selon la typologie de la pièce à usiner et/ou en fonction de la phase d'usinage d'une même pièce.

Selon un mode de réalisation avantageux, la broche de canon et la pince ou mécanisme de serrage sont reliés au fourreau du canon par une liaison pivot, par exemple par des paliers ou roulements à billes, ayant un axe de rotation coaxial par rapport à l'axe de translation et de rotation de la pièce.

Cette solution présente l'avantage de permettre un usinage dans lequel le canon de guidage est soit libre en rotation, soit en rotation imposée par la poupée mobile ou par un actuateur ou moteur agissant directement sur le canon de guidage. L'actuateur ou moteur peut être intégré ou externe au canon de guidage.

Selon un mode de réalisations avantageux, le tour comprend un troisième dispositif de couplage arrangé pour opérer entre le canon de guidage et la poupée mobile ; et le troisième dispositif de couplage est arrangé pour transmettre une rotation de la poupée mobile au canon de guidage. De préférence, le troisième dispositif de couplage est arrangé pour transmettre une rotation d'une partie rotative de la poupée mobile à la pince ou mécanisme de serrage du canon et/ou à la broche de canon.

Selon un mode de réalisation, le troisième dispositif de couplage est embrayable/débrayable.

Selon un mode de réalisation, une portion du fourreau est arrangée pour entourer radialement une portion d'extrémité de la poupée mobile, notamment de la partie rotative de la poupée mobile. Le troisième dispositif de couplage comprend une protubérance coopérante avec une rainure axiale ;
la portion d'extrémité de la broche de canon comprenant l'un parmi la protubérance et la rainure axiale; et
la portion d'extrémité de la poupée mobile comprenant l'autre parmi la protubérance et ladite rainure axiale.

Cette solution présente l'avantage de permettre un usinage selon un mode dans lequel la broche de canon et/ou la pince ou mécanisme de serrage du canon sont entrainées en rotation par la poupée mobile.

Selon un mode de réalisation, le tour est un tour à commande numérique (CNC), automatique ou semi-automatique.

L'invention concerne également un canon de guidage pour tour d'usinage selon la revendication 21 comprenant:
- une broche de canon ;
- une pince ou mécanisme de serrage ; et
- un fourreau du canon entourant au moins partiellement la broche de canon et/ou la pince ou mécanisme de serrage ;
   le canon de guidage étant arrangé pour opérer soit en mode canon, soit en mode pince ;
   ledit fourreau du canon étant arrangé pour être relié à un bâti d'un tour d'usinage, notamment par une liaison permettant une translation dudit fourreau du canon par rapport audit bâti, notamment de façon sensiblement axiale par rapport à l'axe de translation et de rotation d'une pièce à usiner lorsqu'elle est maintenue par ledit canon de guidage;.
   la broche de canon et la pince ou mécanisme de serrage étant arrangés pour être amovibles par rapport audit fourreau, de préférence axialement.

Le canon de guidage comprend un corps de canon logeant ladite broche de canon et la dite pince ou mécanisme de serrage, le dit corps de canon étant arrangé pour être amovible par rapport audit fourreau, axialement.

### Brève description des figures

Des exemples de mise en œuvre de l'invention sont indiqués dans la description illustrée par les figures annexées dans lesquelles :
La figure 1 illustre une vue frontale d'un canon de guidage relié à un bâti d'un tour selon l'invention ;
La figure 2 illustre une coupe latérale de la figure 1, selon la ligne DD;
La figure 3 illustre une vue détaillée de la pince de serrage et de la broche de canon, selon l'invention;
La figure 4 illustre un enlèvement du corps de canon amovible et comprenant la pince de serrage et de la broche de canon depuis le bâti, selon l'invention ;
La figure 5 illustre le canon de guidage entourant partiellement une extrémité de la poupée mobile, selon l'invention ;
La figure 6 illustre des détails d'une surface du fourreau du canon de guidage et du corps de canon amovible, selon l'invention ;
Les figures 7-10 illustrent des étapes d'une procédure d'avancement de la barre de ravitaillement, selon l'invention ;
Les figures 11 et 12 illustrent des étapes d'une procédure d'usinage à pince de serrage fermée, selon l'invention.

### Exemple(s) de mode de réalisation de l'invention

L'invention concerne un tour d'usinage comprenant un canon de guidage ayant une pince de serrage.

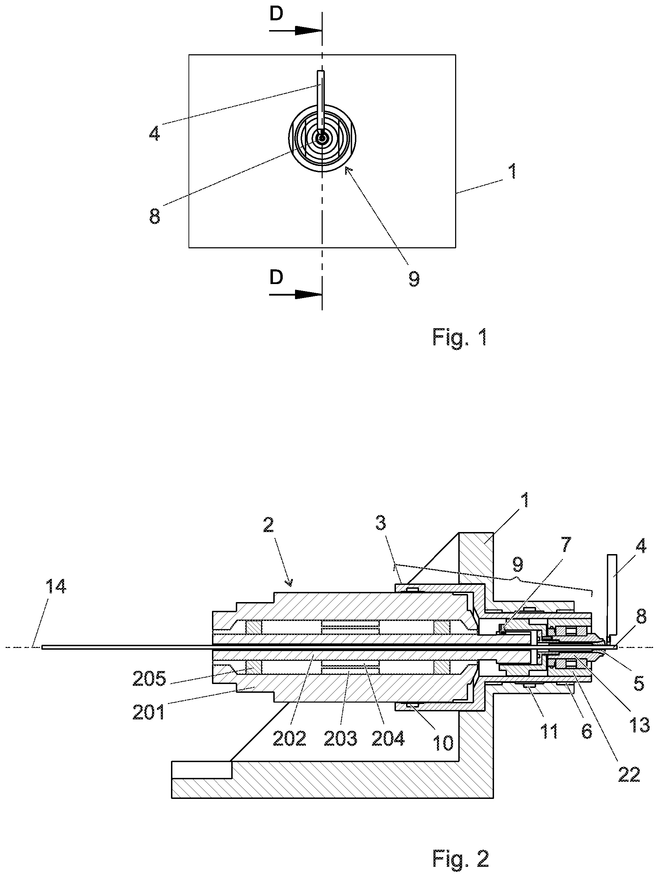

Les figures 1 et 2 illustrent un canon de guidage 9 relié à un bâti 1 d'un tour d'usinage comprenant un outil d'usinage 4 et une poupée mobile 2 arrangée pour la rotation et l'avancement d'une pièce 8 le long d'un axe 14 de translation et de rotation de la pièce.

Le canon de guidage 9 comprend un corps de canon 22 enveloppant une broche de canon 13 ayant un passage interne permettant de retenir et de faire glisser une portion d'une pièce 8 à usiner dans ledit passage interne.

La pièce à usiner présente normalement une forme sensiblement cylindrique. La pièce 8 peut avoir une forme d'une barre d'alimentation.

Le diamètre interne du passage de la broche de canon 13 présente une forme cylindrique avec un diamètre de dimension légèrement supérieur au diamètre de la pièce à usiner de façon de créer une surface de support ne moulant qu'une partie des surfaces périphériques de la pièce. Ce passage permet ainsi d'agir comme point de support à la pièce, tout en garantissant son avancement au travers du passage. La relation entre ce passage et la pièce à usiner est une liaison de type pivot glissant.

Le corps de canon 22 comprend une pince de serrage ou mécanisme de serrage 5 arrangée pour opérer une force de serrage autour d'une ou de plusieurs portions périphériques de la pièce 8 afin de bloquer tout déplacement, notamment axial, de la pièce par rapport à la pince ou le mécanisme de serrage. La pince ou le mécanisme de serrage est arrangée pour opérer :
- en mode fermé (ou serré), c'est-à-dire la pince ou le mécanisme de serrage 5 opère une force de serrage au moins partiellement autour de la pièce 8, force suffisant à empêcher un mouvement relatif de la pièce par rapport à la pince de serrage; et
- en mode ouvert (ou desserré), c'est-à-dire la pince le mécanisme de serrage 5 n'applique aucune force de serrage par rapport à la pièce 8 à usiner.

Le canon de guidage 9 des figures 1 et 2 est arrangé pour opérer :
- en mode canon, c'est-à-dire la pince ou mécanisme de serrage 5 opère en mode ouvert de façon à ce que la pièce 8 est guidée par la broche de canon 13; la pièce 8 est ainsi reliée au canon de guidage par une liaison pivot glissant qui permet un déplacement axial ainsi qu'une rotation de la pièce par rapport au canon de guidage 9 ; et
- en mode pince, c'est-à-dire la pince ou mécanisme de serrage 5 opère en mode fermé de façon à empêcher tout mouvement relatif de la pièce par rapport à la pince ou mécanisme de serrage 5 ; la pièce 8 est ainsi reliée au canon de guidage par une liaison empêchant un mouvement axial de la pièce par rapport au canon de guidage 9.

Selon l'invention, la broche de canon 13 et la pince de serrage 5 peuvent être deux éléments distincts, par exemple l'un placé axialement à côté de l'autre. Avantageusement, la pince de serrage 5 est placée du côté le plus proche de la zone d'usinage afin de pouvoir retenir la pièce très proche de la portion de la pièce entrant en contact avec l'outil.

Selon l'invention, la broche de canon 13 et la pince de serrage 5 peuvent être réunies en un unique élément apte à opérer en mode canon et en mode pince. Par exemple, une broche de canon peut être ainsi équipée de fonctionnalité de pince de serrage par l'ajout d'un dispositif activable/déactivable mécanique, électromécanique, hydraulique ou pneumatique apte à faire varier les dimensions internes d'une portion ou de l'ensemble du passage interne de la broche de canon.

Dans l'exemple des figures 1 et 2, une portion d'extrémité de la broche de canon 13 est pourvue d'un mécanisme de serrage 5 activable/déactivable arrangé pour opérer comme pince de serrage. Ce mécanisme 5 de serrage permet, sur commande, de réduire le diamètre interne du passage de la broche de canon 13 afin d'opérer un serrage sur la pièce 8 de façon à empêcher tout déplacement de cette dernière par rapport au mécanisme de serrage 5 et par rapport à la broche de canon 13.

Le canon de guidage 9 comprend un fourreau 3 du canon qui entoure radialement le corps de canon 22 qui entoure au moins partiellement et radialement la broche de canon 13 et le mécanisme de serrage 5. Le corps de canon 22 et le fourreau 3 du canon sont arrangé pour empêcher toute translation et toute rotation du corps de canon 22 par rapport au fourreau 3 du canon, lorsque le corps de canon 22 est dans une position opérationnelle.

Le fourreau 3 est relié au bâti 1 par une liaison permettant son déplacement par rapport au bâti de façon sensiblement axiale par rapport à l'axe 14 de translation et de rotation de la pièce. La liaison peut être une liaison glissière ou une liaison pivot glissant.

Le fourreau 3 du canon peut être relié au bâti par moyen d'une pluralité de paliers ne permettant qu'une translation axiale du fourreau 3 par rapport au bâti 1 (liaison glissière).

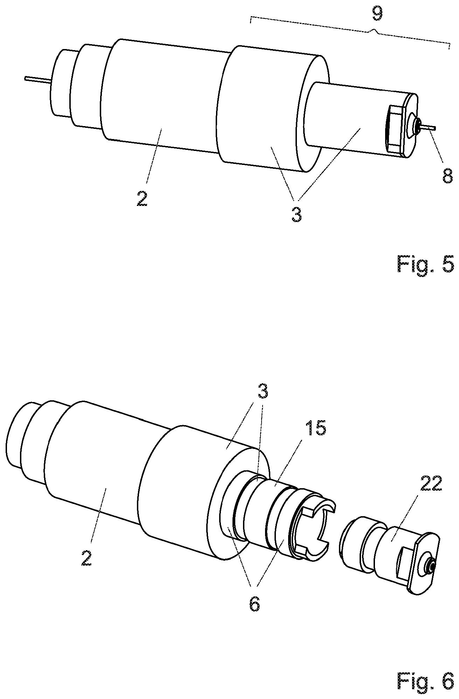

Un couple de paliers 6 en forme d'anneau pouvant être placé autour des surfaces périphériques du fourreau 3 du canon sont notamment visibles dans les illustrations des figures 6, 11 et 12.

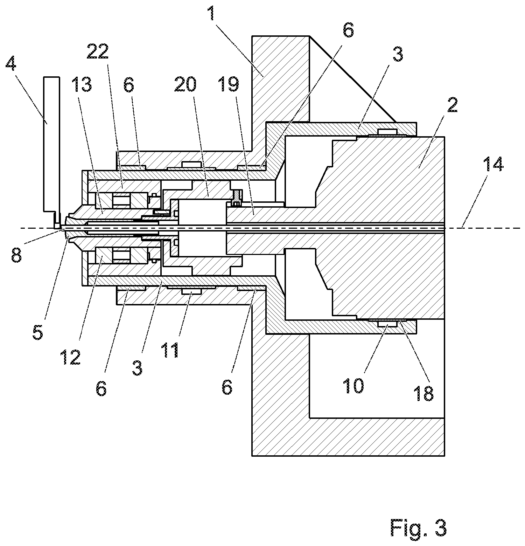

De façon alternative, un couple de paliers 6 en forme d'anneau peut être fixé dans une portion du bâti de façon à entourer une portion des surfaces périphériques du fourreau 3 du canon, lorsque ce dernier est inséré de façon opérationnelle dans le bâti. Cette variante est illustrée notamment dans les figures 3-5.

La broche de canon 13 et le mécanisme de serrage 5 sont retenus au corps de canon 22 au moyen d'une liaison permettant une rotation de la broche de canon 13, et du mécanisme de serrage 5 logé dans la broche de canon 13, par rapport au corps de canon 22, en particulier par rapport au fourreau 3 lorsque le corps de canon 22 est dans une position opérationnelle.. La liaison peut être une liaison pivot ayant un axe de rotation coaxial par rapport à l'axe 14 de translation et de rotation.

Dans le mode de réalisation des figures 1-4, le corps de canon 22 retient l'ensemble formé de la broche de canon 13 et du mécanisme de serrage 5 au moyen d'une pluralité de roulements à billes 12.

Cette solution présente l'avantage de permettre un usinage dans lequel la broche de canon 13 et le mécanisme de serrage 5 sont soit libres en rotation, soit en rotation imposée par la poupée mobile via une rotation de la pièce. Lorsque le canon de guidage 9 est en mode pince, la pièce 8 est reliée au canon de guidage par une liaison pivot empêchant un mouvement axial de la pièce par rapport au fourreau 3 du canon tout en permettant une rotation de la pièce par rapport au fourreau 3 du canon.

Le canon de guidage peut être motorisé pour entrainer en rotation la broche de canon 13 et le mécanisme de serrage 5.

Alternativement, le canon de guidage peut être agencé pour entrainer en rotation la broche de canon 13 et le mécanisme de serrage 5 au moyen d'un engrenage et/ou moteur ou actuateur externe. L'actuateur ou moteur peut être fixé sur le bâti et, au moyen d'un système de transmission, transmettre le mouvement rotatif à la broche de canon 13 et au mécanisme de serrage 5.

Ces solutions présentent l'avantage de permettre une opération d'usinage dans lequel la broche de canon et le mécanisme de serrage sont en rotation imposée par l'actuateur ou moteur.

La poupée mobile 2 peut comprendre une partie externe 201 et une partie rotative 202 entourant une portion de la pièce à usiner 8 et destinée à placer en rotation la pièce à usiner.

Les parties 201,202 de la poupée mobile sont reliées par une liaison pivot permettant une rotation de la partie rotative 202 par rapport à la partie externe 201. La liaison pivot peut être réalisée par une pluralité de roulements 205, par exemples des roulements à billes.

La poupée mobile peut être motorisée, par exemple au travers d'un actuateur ou d'un moteur 203,204. Pour des raisons de simplicité des illustrations, la poupée mobile 2 est représentée par la suite des illustrations de façon succincte et dépourvu de détail concernant la partie rotative 202 et externe 201.

Avantageusement, l'ensemble ou au moins une partie du canon de guidage comprenant la broche de canon et/ou la pince ou mécanisme du canon est destiné à être amovible du bâti. De préférence, l'ensemble ou cette partie du canon de guidage est amovible axialement selon l'axe de translation et de rotation de la pièce, de préférence côté du bâti qui est tourné vers la zone d'usinage, c'est-à-dire vers la position de travail de l'outil ou des outils du tour.

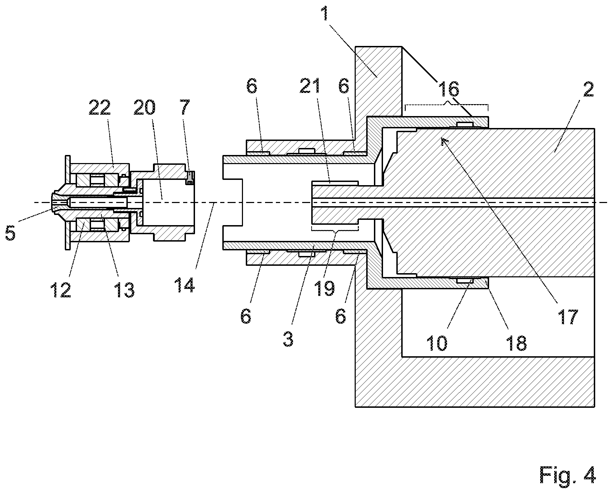

Dans les modes de réalisation illustrées par figures 1-12, le corps de canon 22 est arrangé pour être amovible par rapport au bâti 1, notamment à être amovible par rapport au fourreau 3 du canon. De préférence, comme visible par les illustrations des figures 4 et 6, le corps de canon 22 est arrangé pour être amovible axialement en direction de la zone d'usinage.

Le canon de guidage est pourvu d'un mécanisme de couplage permettant un couplage entre le fourreau 3 du canon et le corps de canon 22 retenant la broche de canon 13 et le mécanisme de serrage 5. Le rôle de ce couplage est d'interdire, lorsqu'il est opérationnel, un mouvement de translation axiale et de rotation du corps de canon 22 par rapport au fourreau 3 du canon ainsi que de permettre, lorsqu'il est non opérationnel, une sortie du corps de canon 22 hors du fourreau 3 du canon.

Avantageusement, ce couplage peut être activé/désactivé du côté du bâti 1 qui est tourné vers la zone d'usinage, c'est-à-dire vers la position de travail de l'outil ou des outils du tour.

Le corps de canon 22 peut être relié au fourreau 3 au travers d'une pluralité d'éléments de fixation amovibles, par exemples des vis (pas illustrées dans les figures). Avantageusement, les éléments de fixation amovibles sont accessibles du côté du bâti qui est tourné vers la zone d'usinage, c'est-à-dire vers la position de travail de l'outil ou des outils du tour.

Un des avantages de ce tour découlant de la modularité de la partie opérationnelle du canon de guidage 9 est la possibilité d'un changement rapide de la broche de canon 13 et/ou du mécanisme de serrage 5, notamment en fonction d'une typologie d'usinage, d'une typologie des pièces à usiner et/ou d'une séquence d'usinage. Par exemple, une broche de canon 13 et un mécanisme de serrage 5 peuvent être choisie parmi un large éventail de broches et de mécanismes de serrage différents, chacun ayant des caractéristiques techniques différentes. En particulier, une broche de canon 13 peut être choisie afin de répondre à des exigences déroulant de la taille (diamètre, longueur) de la pièce ou barre d'alimentation, alors qu'un mécanisme de serrage 5 peut être choisi afin de répondre à des exigences déroulant du type du matériau (rigidité, poids spécifique, élasticité) de la pièce à usiner.

Le tour comprend un premier dispositif de couplage embrayable/débrayable opérant entre la poupée 2 mobile et le canon de guidage 9, notamment entre la poupée 2 mobile et la broche de canon 13, afin de coupler axialement la poupée mobile 2 avec le canon de guidage 3, notamment afin de coupler axialement la poupée 2 mobile et la broche de canon 13 comprenant le mécanisme de serrage 5.

Selon l'invention, par dispositif de couplage embrayable/débrayable on entend un dispositif de couplage arrangé pour opérer en :
- mode embrayé, dans lequel le dispositif de couplage opère un couplage entre deux entités distinctes dont le mouvement devient unique ; et
- un mode débrayé dans lequel le dispositif de couplage n'opère aucun couplage entre les deux entités, dont le mouvement de chacune des deux entités étant indépendant.

Avantageusement, un changement de mode d'opération d'un dispositif de couplage embrayable/débrayable est effectué au travers d'un dispositif ou mécanisme d'actuation.

Selon l'invention, un dispositif ou mécanisme d'actuation d'un dispositif de couplage embrayable/débrayable peut être interne ou externe au canon de guidage. Avantageusement, ce dispositif ou mécanisme d'actuation peut être contrôlé de façon automatique ou semi-automatique par l'opérateur.

Selon l'exemple des figures 1-6, une portion d'extrémité 16 du fourreau 3 entoure radialement une portion d'extrémité 17 de la poupée mobile, notamment de la partie externe 201 de la poupée mobile 2.

Avantageusement, la portion d'extrémité 16 du fourreau 3 est arrangée pour entourer toujours radialement au moins une partie de la portion d'extrémité 17 de la poupée mobile, lorsque la poupée se déplace ou recule axialement par rapport au fourreau 3 du canon dans le but de faire avancer la pièce à usiner 8.

La portion d'extrémité 16 du fourreau 3 et la portion d'extrémité 17 de la poupée mobile sont avantageusement arrangées à maintenir fixe le positionnement angulaire de la partie externe 201 de la poupée mobile par rapport au fourreau.

Le premier dispositif de couplage comprend un dispositif de freinage 10 qui est arrangé pour opérer entre cette portion d'extrémité 16 du fourreau du canon et cette portion d'extrémité 17 de la poupée mobile.

Avantageusement, le dispositif de freinage 10 peut opérer radialement sur une surface de cette extrémité 17 de la poupée mobile de façon à maintenir fixe le positionnement axial de la poupée mobile par rapport au fourreau.

La surface 18 peut être une surface dédiée à cette fonction et avoir une forme d'une bande allongée axialement sur la surface de portion d'extrémité 17 de la poupée mobile afin de permettre un couplage entre le fourreau du canon et la poupée mobile indépendamment de la position axiale de la poupée mobile par rapport au fourreau du canon.

Avantageusement, la forme et/ou le matériel de cette surface est choisie de façon à assurer une action efficace et efficiente du dispositif de freinage 11 sur cette surface.

Avantageusement, le premier dispositif de couplage comprend une pluralité de dispositifs de freinage 10 agissant sur une pluralité de surfaces de la poupée mobile 2. Avantageusement, ces dispositifs sont localisés autour de la surface 18 à des positions opposées ou équidistantes angulairement l'un par rapport à l'autre.

Le deuxième dispositif de couplage peut comprendre des portions 18 de surface du fourreau du canon 3 qui sont mobiles par rapport au fourreau ainsi que arrangées pour entrer en contact avec les portions de surfaces de la poupée mobile 2 afin d'opérer une action de couplage entre le canon de guidage 9 et la poupée mobile 2.

Alternativement, le premier dispositif de couplage peut comprendre d'autre moyen permettant un couplage entre le fourreau du canon 3 et la poupée mobile 2, notamment des moyens de couplage indexables (par exemple des goupilles).

Le tour comprend un deuxième dispositif de couplage embrayable/débrayable qui opère entre le canon de guidage 9 et le bâti 1, notamment entre le fourreau 3 du canon et le bâti 1. Le deuxième dispositif de couplage est arrangé pour fixer axialement la position du canon de guidage 9 par rapport au bâti 1.

Selon un mode de réalisation des figures 6, 11 et 12, le deuxième dispositif de couplage comprend un dispositif de freinage 11 arrangé pour opérer radialement sur une surface 15 du fourreau 3 du canon de façon à maintenir fixe la position axiale et la position angulaire du fourreau de canon 3 par rapport au bâti 1. Selon un mode de réalisation, le deuxième dispositif de couplage est en outre destiné à maintenir fixe la position angulaire du fourreau de canon 3 par rapport au bâti 1 (en cas d'une liaison pivot glissant reliant le fourreau au bâti).

Avantageusement, comme illustré par la figure 6, la surface 15 a une forme d'anneau et entoure radialement une portion du fourreau du canon afin de permettre un couplage entre le fourreau 3 du canon et le bâti 1 indépendamment de la position angulaire du fourreau du canon 3 par rapport au bâti 1.

Avantageusement, la forme et/ou le matériel de la surface 15 est choisie de façon à assurer une action efficace et efficiente du dispositif de freinage 11 sur cette surface.

Avantageusement, le deuxième dispositif de couplage comprend une pluralité de dispositifs de freinage 11 agissant sur la même surface 15. Avantageusement, ces dispositifs sont localisés autour de la surface 15 à des positions distinctes, notamment opposées ou équidistantes angulairement l'une par rapport à l'autre.

Selon un autre mode de réalisation, le deuxième dispositif de couplage comprend des portions 15a de surface du bâti qui sont mobiles par rapport au bâti ainsi que arrangées pour entrer en contact avec des portions de surfaces du fourreau 3 du canon afin d'opérer une action de couplage entre le canon de guidage 9 et le bâti 1. Ce mode de réalisation est illustré notamment par les figures 5 et 7-10.

Alternativement, le deuxième dispositif de couplage peut comprendre d'autres moyens permettant un couplage entre les deux parties, notamment des moyens de couplage indexables (par exemple des goupilles).Le tour comprend un troisième dispositif de couplage arrangé pour opérer entre l'ensemble ou une portion du canon de guidage 9 et la poupée mobile 2 afin de transmettre une rotation de la poupée mobile 2 à l'ensemble ou une portion du canon de guidage 9.

Le troisième dispositif de couplage illustré par les figures 1-4 est arrangé pour transmettre une rotation de la partie rotative 202 de la poupée mobile 2 à la broche 13 comprenant le mécanisme de serrage 5.

Selon un mode de réalisation, une portion d'extrémité 20 de la broche de canon 13 est reliée à une portion d'extrémité 19 de la partie rotative 202 de la poupée mobile 2 par une liaison glissière, ce qui garantit un mouvement axial de la poupée mobile 2 par rapport à la broche de canon 13.

Selon le mode de réalisation illustré par les figures 1-4, la portion d'extrémité 20 de la broche 13 du canon est arrangée pour entourer radialement la portion d'extrémité 19 de la partie rotative 202 de la poupée 2 mobile. La portion d'extrémité 20 de la broche 13 du canon comprend une protubérance 7 coopérant avec une rainure axiale 21 de la portion d'extrémité 19 de la poupée mobile. Cette liaison protubérance-rainure axiale assure une transmission d'une rotation de la poupée mobile à la broche de canon 13 et au mécanisme de serrage 5, tout en permettant un déplacement axial de la poupée mobile 2 par rapport à l'ensemble formé de la broche de canon 13 et du mécanisme de serrage 5.

Le troisième dispositif de couplage opère de façon permanente lorsque le corps de canon 22 est relié au fourreau 3 de canon dans une position opérationnelle et la poupée mobile est dans une position de maintien ou d'avancement d'une pièce à usiner 8.

Selon un outre mode de réalisation, la broche de canon 13, comprenant le mécanisme de serrage 5, est reliée à la partie rotative 202 de la poupée mobile 2 au travers d'un système de rouages, par exemple agissant de façon simultanée sur une surface dentée de la partie rotative 202 de la poupée mobile 2 et sur une surface dentée de la broche de canon 13 et/ou du mécanisme de serrage 5.

Selon un mode de réalisation, le troisième dispositif de couplage peut être de type embrayable/débrayable.

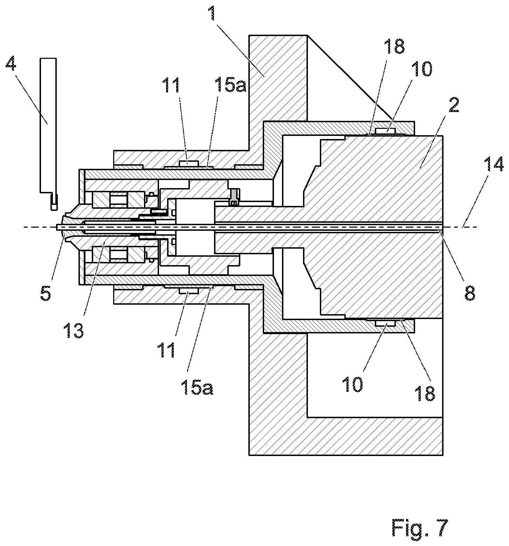

Les figures 7-10 illustrent des étapes d'une procédure d'avancement de la pièce ou de la barre de ravitaillement 8, notamment comprenant des étapes exécutées en temps masqué.

La figure 7 illustre une étape d'usinage de la pièce 8 dans laquelle :
- la pièce 8 est retenue par la poupée mobile 2 dans une position axiale reculée et supportée par le canon de guidage 9 en mode canon ;
- le premier dispositif de couplage est débrayé (pas de couplage axial entre le canon de guidage et la poupée mobile) ; les dispositifs de freinage 10 du fourreau 3 du canon n'agissent pas sur les surfaces 18 de la poupée mobile ;
- le deuxième dispositif de couplage est embrayé (couplage entre le fourreau de canon et le bâti) ; les dispositifs de freinage 11 du bâti 1 agissent sur les surfaces 15 du fourreau 3 du canon.

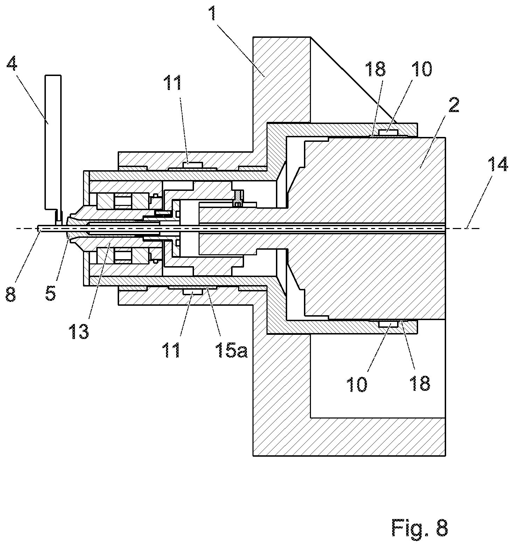

La figure 8 illustre l'étape suivante dans laquelle la pièce 8 est déplacée axialement au moyen de la poupée mobile 2 dans une position permettant un usinage de la pièce 8.

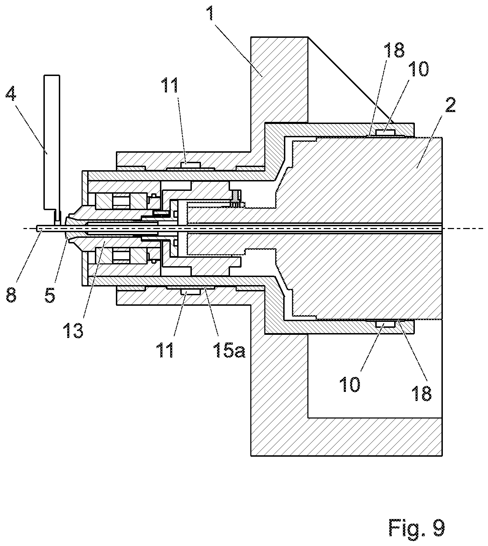

La figure 9 illustre l'étape suivante dans laquelle la pièce 8 est guidée par le canon de guidage 9 en mode canon et usinée par l'outil 4.

La position angulaire et la rotation de la pièce lors de son avancement et son usinage sont imposées par la poupée mobile.

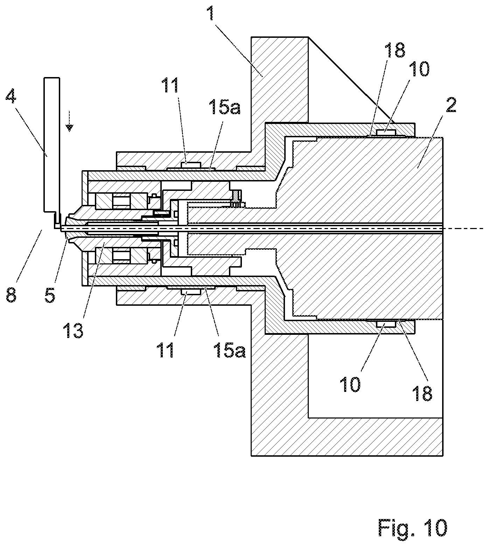

La figure 10 illustre une étape de finalisation ou de coupe de la pièce 8 usinée dans laquelle :
- la pièce 8 est maintenant retenue par le canon de guidage 9 en mode pince ;
- la poupée mobile ne retient plus la barre 8 et elle est ainsi libre de se déplacer axialement dans une position reculée afin de procéder à une nouvelle procédure d'avancement de la pièce ou de la barre de ravitaillement 8, tel que décrit auparavant et illustré par les figure 7-10.

Avantageusement, un déplacement de la poupée mobile dans la position reculée durant l'opération de coupe de la pièce permet une exécution de cette étape en temps masqué.

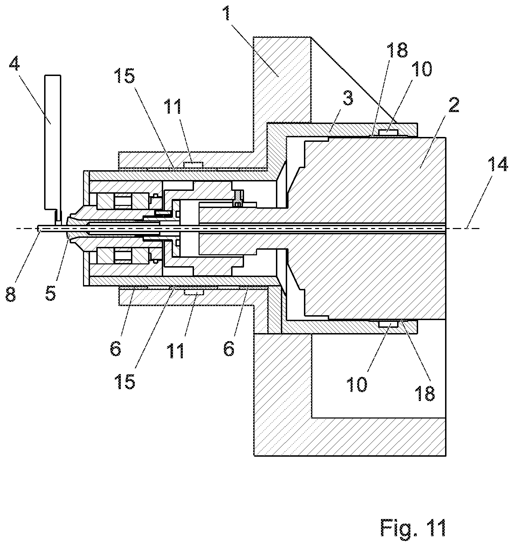

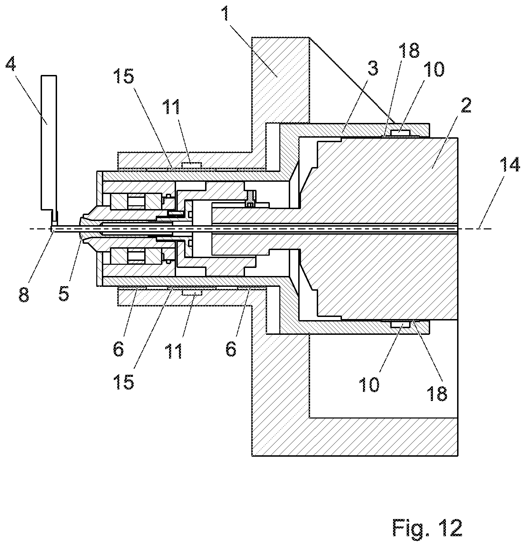

Les figures 11 et 12 illustrent des étapes d'une procédure d'usinage d'une pièce à usiner 8 retenue par un canon de guidage 9 en mode pince.

La figure 11 illustre une étape d'usinage de la pièce 8 dans laquelle :
- la pièce 8 est retenue par la poupée mobile 2 et par le canon de guidage 9 en mode pince ;
- le premier dispositif de couplage est embrayé, couplant axialement le corps de canon 22 avec la poupée mobile 2 : les dispositifs de freinage 10 du fourreau 3 du canon agissent sur les surfaces 18 de la poupée mobile de façon à maintenir fixe le positionnement relatif entre la poupée mobile et le corps de canon 22 ;
- le deuxième dispositif de couplage est débrayé (pas de couplage axial entre le fourreau de canon et le bâti) ; les dispositifs de freinage 11 du bâti 1 n'agissent pas sur les surfaces 15 du fourreau 3 du canon.

La pièce peut être ainsi entrainée en déplacement axial (avancement et/ou recul), en rotation ainsi que positionnée angulairement par rapport au bâti du canon par une action conjointe du corps de canon 22 (notamment du mécanisme de serrage 5) et de la poupée mobile 2. Le corps de canon 22 et la poupée mobile 2 opèrent comme un unique élément de rétention de la pièce 8 à usiner.

Une action en déplacement axial du corps de canon 22 est guidée par l'action de la poupée mobile 2 au travers d'un mouvement axial du fourreau 3 imposé par le premier dispositif de couplage.

Une action en rotation de la broche de canon 13 comprenant le mécanisme de serrage 5 est guidée par l'action de la poupée mobile 2 au travers du troisième dispositif de couplage opérant entre la portion d'extrémité 20 de la broche de canon et la portion d'extrémité 19 de la partie rotative 202 de la poupée mobile 2.

Une rétention conjointe de la pièce par le mécanisme de serrage 5 et la poupée mobile 2 permet de réduire le jeu radial existant entre le canon de guidage et la pièce ce qui permet un usinage plus précis de la pièce.

Dans un mode de réalisation, lors de la finalisation de l'usinage de la pièce avec le canon opérant en en mode pince, la poupée mobile 2 est déplacée dans une position reculée en temps masqué afin de se préparer à une exécuter une opération d'avancement de la pièce à usiner (au travers de la barre d'alimentation) pour un nouveau cycle d'usinage.

Le tour d'usinage étant équipé d'un canon de guidage opérable en mode canon et en mode pince alors que le corps de canon 22 (comprenant la broche de canon 13 et le mécanisme de serrage 5) peut être soit entrainé axialement par la poupée mobile, soit fixé axialement par rapport au bâti, permet un large éventail de différentes typologies d'usinage.

Parmi ces différentes typologies d'usinage, il y a des techniques d'usinage typiques des tours dits décolleteuses, tels que :
- usinage de la pièce au travers d'un canon de guidage en mode canon et fixe par rapport au bâti ainsi qu'avec un avancement continu de la pièce, notamment avec une opération de recul de la poupée mobile en temps masqué ;
- usinage de la pièce au travers avec le canon de guidage en mode canon et fixe par rapport au bâti ainsi qu'avec un avancement discret de la pièce, notamment avec une opération de recul de la poupée mobile en temps masqué.

Parmi les différentes typologies d'usinage, il y a des techniques d'usinage typiques des tours de précision, tels que :
- usinage de la pièce avec le canon de guidage en mode pince comprenant un unique avancement discret de la pièce, notamment avec une opération de recul de la poupée mobile en temps masqué ;
- usinage de la pièce avec le canon de guidage en mode pince comprenant une pluralité d'avancements discrets de la pièce, notamment avec une opération de recul de la poupée mobile en temps masqué ;
- usinage de la pièce avec le canon de guidage en mode pince comprenant un seul ou plusieurs déplacements axiales et bidirectionnelles de la pièce.

Le tour d'usinage étant équipé d'un canon de guidage opérable en mode canon et en mode pince alors que la broche de canon et le mécanisme de serrage peuvent être soit entrainés axialement par la poupée mobile, soit fixes axialement par rapport au bâti, permet en outre un changement de la typologie de l'usinage pendant une opération d'usinage de la même pièce.

Le tour d'usinage permet un plus large éventail d'opérations d'usinage par rapport à l'état de la technique usinage, notamment permettant une combinaison de différentes typologies d'usinage.

Par exemple, un usinage en mode canon d'une pièce peut être suivi d'une opération en mode pince, par exemple afin d'exécuter une opération transversale de perçage pour produire un orifice radiale sur une surface de la pièce.

A la différence de la typologie d'usinage, l'outil 4 ou une pluralité d'outils d'usinage peut être arrangé pour opérer sur une surface de la pièce 8 selon une position axiale fixe et prédéterminée par rapport au bâti.

A la différence de la typologie d'usinage, l'outil 4 ou une pluralité d'outils d'usinage peut être arrangé pour opérer sur une surface de la pièce 8 en se déplaçant axialement le long de l'axe de translation et de rotation de la pièce 8.

### Numéros de référence employés sur les figures

- 1: Bâti
- 2: Poupée mobile
- 201: Partie externe de la poupée mobile
- 202: Partie rotative de la poupée mobile
- 203-4: Moteur
- 205: Roulement
- 3: Fourreau du canon
- 4: Outil
- 5: Mécanisme de serrage
- 6: Palier
- 7: Languette
- 8: Pièce à usiner
- 9: Canon de guidage
- 10: Frein canon-poupée
- 11: Frein canon-bâti
- 12: Roulement
- 13: Broche de canon
- 14: Axe de translation et de rotation de la pièce
- 15: Surface de freinage
- 15a: Portions de surface du bâti
- 16: Portion d'extrémité du fourreau du canon
- 17: Portion d'extrémité de la poupée mobile
- 18: Surface de freinage
- 19: Portion d'extrémité de la poupée mobile
- 20: Portion d'extrémité de la broche de canon
- 21: Rainure
- 22: Corps de canon

## Revendications

1. Tour d'usinage comprenant :
une poupée mobile (2) arrangée pour une rotation et une translation d'une pièce (8) à usiner par rapport à un axe (14) de translation et de rotation;
un canon de guidage (9) arrangé pour être fixé à un bâti (1) du tour et comprenant
une broche de canon (13) et
une pince ou un mécanisme de serrage (5) ;
le canon de guidage (9) étant arrangé pour opérer soit en mode canon, soit en mode pince ;
**caractérisé en ce que**
le canon de guidage (9) est arrangé pour être mobile axialement par rapport au bâti selon ledit axe (14);
le tour est arrangé pour opérer dans un premier mode dans lequel le canon de guidage est entrainé axialement par la poupée mobile ; et
le tour est arrangé pour opérer dans un deuxième mode dans lequel la position axiale du canon de guidage par rapport au bâti est fixe.

2. Tour selon la revendication précédente, le tour comprenant un premier dispositif de couplage ;
ledit premier dispositif de couplage étant embrayable/débrayable et opérant entre le canon de guidage (9) et la poupée (2) mobile ; et
ledit premier dispositif de couplage étant arrangé pour coupler axialement le canon de guidage (3) et la poupée mobile (2) selon ledit axe (14).

3. Tour selon l'une des revendications précédentes, le tour comprenant un deuxième dispositif de couplage ;
ledit deuxième dispositif de couplage étant embrayable/débrayable et opérant entre le canon de guidage (9) et le bâti (1) ;
ledit deuxième dispositif de couplage étant arrangé pour fixer axialement la position du canon de guidage (3) par rapport au bâti (1) selon ledit axe (14).

4. Tour selon l'une des revendications précédentes, dans lequel le canon de guidage (9) comprend un fourreau (3) du canon entourant au moins partiellement la broche de canon (13) et/ou la pince ou mécanisme de serrage (5) ;
ledit fourreau (3) du canon étant arrangé pour être relié au bâti (1) par une liaison permettant une translation axiale dudit fourreau (3) du canon par rapport au bâti (1).

5. Tour selon la revendication précédente, ladite liaison comprenant des paliers (6) arrangés pour permettre ladite translation axiale du fourreau (3) du canon par rapport au bâti (1).

6. Tour selon la revendication 2 et 4, une portion d'extrémité (16) du fourreau du canon étant arrangée pour entourer radialement une portion d'extrémité (17) de la poupée mobile ; ledit premier dispositif de couplage étant arrangé pour opérer entre la dite portion d'extrémité (16) du fourreau du canon et ladite portion d'extrémité (17) de la poupée mobile.

7. Tour selon la revendication précédente, ledit premier dispositif de couplage comprenant un dispositif de freinage (10) arrangé pour opérer radialement sur une surface (18) de ladite extrémité (17) de la poupée mobile de façon à maintenir un positionnement axial de la poupée mobile par rapport au fourreau.

8. Tour selon la revendication 3, ledit deuxième dispositif de couplage comprenant un dispositif de freinage (11) arrangé pour opérer radialement sur une surface du fourreau (3) du canon de façon à fixer un positionnement axial du fourreau par rapport au bâti.

9. Tour selon l'une des revendications précédentes, la broche de canon (13) et la pince ou mécanisme de serrage (5) étant reliés audit fourreau (3) du canon par une liaison pivot ayant un axe de rotation coaxiale par rapport audit axe (14).

10. Tour selon la revendication précédente, la liaison pivot comprenant des roulements, notamment des roulements (12) à billes.

11. Tour selon l'une des revendications précédentes, comprenant un troisième dispositif de couplage arrangé pour opérer entre le canon de guidage (9) et la poupée (2) mobile ; et
ledit troisième dispositif de couplage étant arrangé pour transmettre une rotation d'une partie rotative (202) de la poupée mobile (2) à la pince ou mécanisme (5) de serrage du canon et/ou à la broche de canon (13).

12. Tour selon la revendication précédente, ledit troisième dispositif de couplage étant embrayable/débrayable.

13. Tour selon la revendication 11 ou 12, une portion d'extrémité (20) de la broche de canon (13) étant arrangée pour entourer radialement une portion d'extrémité (19) de ladite partie rotative (202) de la poupée mobile
ledit troisième dispositif de couplage comprenant une protubérance (7) coopérante avec une rainure axiale (21) ;
la portion d'extrémité (20) de la broche de canon (13) comprenant l'une parmi ladite protubérance (7) et ladite rainure axiale (21) ; et
ladite portion d'extrémité (19) de ladite portion rotative (202) de la poupée mobile (2) comprenant l'autre parmi ladite protubérance (7) et ladite rainure axiale (21).

14. Tour selon l'une des revendications 11 à 13, ladite poupée mobile (2) étant motorisée.

15. Tour selon l'une des revendications précédentes, le canon de guidage (9) étant motorisé.

16. Tour selon l'une des revendications précédentes, la broche de canon (13) et la pince ou mécanisme de serrage (5) étant arrangées pour être amovibles axialement au bâti (1) et/ou au fourreau (3) du canon.

17. Tour selon la revendication précédente, le canon de guidage (9) comprenant un corps de canon (22) ; ledit corps de canon enveloppant radialement la broche de canon (13) et la pince ou mécanisme de serrage (5) ; et ledit corps de canon (22) étant arrangé pour être amovible axialement par rapport au bâti (1) et/ou au fourreau (3) du canon.

18. Tour selon la revendication 16, l'ensemble du canon de guidage (9) étant arrangé pour être amovible axialement par rapport au bâti (1).

19. Tour selon l'une des revendications 16 à 18, l'ensemble du canon (3) ou le corps de canon (22) ou la broche de canon (13) et la pince ou mécanisme de serrage (5) étant arrangé pour être amovible du côté du bâti (1) proche de la zone d'usinage.

20. Tour selon l'une des revendications précédentes, la broche de canon (13) logeant et retenant ladite pince ou mécanisme de serrage (5).

21. Canon de guidage (9) pour tour d'usinage comprenant :
- une broche de canon(13) ;
- une pince ou mécanisme de serrage (5) ; et
- un fourreau (3) du canon entourant au moins partiellement la broche de canon (13) et/ou la pince ou mécanisme de serrage (5) ;
le canon de guidage (9) étant arrangé pour opérer soit en mode canon, soit en mode pince ;
ledit fourreau (3) du canon étant arrangé pour être relié à un bâti (1) d'un tour d'usinage, par une liaison permettant une translation dudit fourreau (3) du canon par rapport audit bâti (1) de façon sensiblement axiale par rapport à un axe (14) de translation et de rotation d'une pièce à usiner lorsqu'elle est maintenue par ledit canon de guidage;
la broche de canon (13) et la pince ou mécanisme de serrage (5) étant arrangés pour être amovibles par rapport audit fourreau (3), de préférence axialement par rapport audit axe (14), le canon de guidage (9) comprenant en outre un corps de canon (22) ; **caractérisé en ce que** ledit corps de canon enveloppe radialement la broche de canon (13) et la pince ou mécanisme de serrage (5) ; et **en ce que** ledit corps de canon (22) est arrangé pour être amovible par rapport audit fourreau (3), axialement par rapport audit axe (14).

22. Canon de guidage selon la revendication 21, dans lequel ledit corps de canon (22) est relié audit fourreau (3) au travers d'une pluralité d'éléments de fixation amovibles qui sont accessibles du côté de la zone d'usinage.

## Patentansprüche

1. Drehbank, umfassend:
einen bewegblichen Spindelstock (2), der für eine Drehung und eine Translation eines zu bearbeitenden Teils (8) bezüglich einer Translations und Rotationsachse (14) angeordnet ist,
eine Führungsbuchse (9), die dazu angeordnet ist, an einem Rahmen (1) der Drehbank befestigt zu werden, und Folgendes umfasst:
eine Buchsenspindel (13) und
einen Greifer oder einen Einspannmechanismus (5),
wobei die Führungsbuchse (9) dazu angeordnet ist, entweder im Buchsenmodus oder im Greifermodus zu wirken,
**dadurch gekennzeichnet, dass**
die Führungsbuchse (9) bezüglich des Rahmens entlang der Achse (14) axial beweglich angeordnet ist,
die Drehbank dazu angeordnet ist, in einem ersten Modus zu wirken, in dem die Führungsbuchse axial von dem bewegblichen Spindelstock angetrieben wird, und
die Drehbank dazu angeordnet ist, in einem zweiten Modus zu wirken, in dem die axiale Position der Führungsbuchse bezüglich des Rahmens festgelegt ist.

2. Drehbank nach dem vorhergehenden Anspruch, wobei die Drehbank eine erste Koppelvorrichtung umfasst,
wobei die erste Koppelvorrichtung einrückbar/ausrückbar ist und zwischen der Führungsbuchse (9) und dem Spindelstock (2) wirkt, und
wobei die erste Koppelvorrichtung dazu angeordnet ist, die Führungsbuchse (3) und den bewegblichen Spindelstock (2) axial entlang der Achse (14) zu koppeln.

3. Drehbank nach einem der vorhergehenden Ansprüche, wobei die Drehbank eine zweite Koppelvorrichtung umfasst,
wobei die zweite Koppelvorrichtung einrückbar/ausrückbar ist und zwischen der Führungsbuchse (9) und dem Rahmen (1) wirkt, und
wobei die zweite Koppelvorrichtung dazu angeordnet ist, die Position der Führungsbuchse (3) bezüglich des Rahmens (1) entlang der Achse (14) axial festzulegen.

4. Drehbank nach einem der vorhergehenden Ansprüche, wobei die Führungsbuchse (9) eine Pinole (3) der Buchse umfasst, die die Buchsenspindel (13) und/oder den Greifer oder Einspannmechanismus (5) mindestens teilweise umgibt,
wobei die Pinole (3) der Buchse dazu angeordnet ist, über eine Verbindung, die eine axiale Translation der Pinole (3) der Buchse bezüglich des Rahmens (1) gestattet, mit dem Rahmen (1) verbunden zu werden.

5. Drehbank nach dem vorhergehenden Anspruch, wobei die Verbindung Lager (6) umfasst, die dazu angeordnet sind, die axiale Translation der Pinole (3) der Buchse bezüglich des Rahmens (1) zu gestatten.

6. Drehbank nach Anspruch 2 und 4, wobei ein Endabschnitt (16) der Pinole der Buchse dazu angeordnet ist, einen Endabschnitt (17) des bewegblichen Spindelstocks radial zu umgeben, wobei die erste Koppelvorrichtung dazu angeordnet ist, zwischen dem Endabschnitt (16) der Pinole der Buchse und dem Endabschnitt (17) des bewegblichen Spindelstocks zu wirken.

7. Drehbank nach dem vorhergehenden Anspruch, wobei die erste Koppelvorrichtung eine Bremsvorrichtung (10) umfasst, die dazu angeordnet ist, radial auf eine Fläche (18) des Endes (17) des bewegblichen Spindelstocks zu wirken, um eine axiale Positionierung des bewegblichen Spindelstocks bezüglich der Pinole aufrechterzuhalten.

8. Drehbank nach Anspruch 3, wobei die zweite Koppelvorrichtung eine Bremsvorrichtung (11) umfasst, die dazu angeordnet ist, radial auf eine Fläche der Pinole (3) der Buchse zu wirken, um eine axiale Positionierung der Pinole bezüglich des Rahmens festzulegen.

9. Drehbank nach einem der vorhergehenden Ansprüche, wobei die Buchsenspindel (13) und der Greifer oder Einspannmechanismus (5) über eine Schwenkverbindung mit einer bezüglich der Achse (14) koaxialen Rotationsachse mit der Pinole (3) der Buchse verbunden sind.

10. Drehbank nach dem vorhergehenden Anspruch, wobei die Schwenkverbindung Wälzlager, insbesondere Kugellager (12), umfasst.

11. Drehbank nach einem der vorhergehenden Ansprüche, umfassend eine dritte Koppelvorrichtung, die dazu angeordnet ist, zwischen der Führungsbuchse (9) und dem bewegblichen Spindelstock (2) zu wirken, und
wobei die dritte Koppelvorrichtung dazu angeordnet ist, eine Drehung eines drehbaren Teils (202) des bewegblichen Spindelstocks (2) auf den Greifer oder Einspannmechanismus (5) der Buchse und/oder auf die Buchsenspindel (13) zu übertragen.

12. Drehbank nach dem vorhergehenden Anspruch, wobei die dritte Koppelvorrichtung einrückbar/ausrückbar ist.

13. Drehbank nach Anspruch 11 oder 12, wobei ein Endabschnitt (20) der Buchsenspindel (13) dazu angeordnet ist, einen Endabschnitt (19) des drehbaren Teils (202) des bewegblichen Spindelstocks radial zu umgeben,
wobei die dritte Koppelvorrichtung einen mit einer axialen Nut (21) zusammenwirkenden Vorsprung (7) umfasst,
wobei der Endabschnitt (20) der Buchsenspindel (13) den Vorsprung (7) oder die axiale Nut (21) umfasst und
wobei der Endabschnitt (19) des drehbaren Abschnitts (202) des bewegblichen Spindelstocks (2) das jeweils andere des Vorsprungs (7) und der axialen Nut (21) umfasst.

14. Drehbank nach einem der Ansprüche 11 bis 13, wobei der bewegblichen Spindelstock (2) motorisiert ist.

15. Drehbank nach einem der vorhergehenden Ansprüche, wobei die Führungsbuchse (9) motorisiert ist.

16. Drehbank nach einem der vorhergehenden Ansprüche, wobei die Buchsenspindel (13) und der Greifer oder Einspannmechanismus (5) axial von dem Rahmen (1) und/oder der Pinole (3) der Buchse entfernbar angeordnet sind.

17. Drehbank nach dem vorhergehenden Anspruch, wobei die Führungsbuchse (9) einen Buchsenkörper (22) umfasst, wobei der Buchsenkörper die Buchsenspindel (13) und den Greifer oder Einspannmechanismus (5) radial umhüllt und wobei der Buchsenkörper (22) axial von dem Rahmen (1) und/oder der Pinole (3) der Buchse entfernbar angeordnet ist.

18. Drehbank nach Anspruch 16, wobei die gesamte Führungsbuchse (9) axial von dem Rahmen (1) entfernbar angeordnet ist.

19. Drehbank nach einem der Ansprüche 16 bis 18, wobei die gesamte Buchse (3) oder der Buchsenkörper (22) oder die Buchsenspindel (13) und der Greifer oder Einspannmechanismus (5) von der Seite des Rahmens (1) in der Nähe der Bearbeitungszone entfernbar angeordnet sind.

20. Drehbank nach einem der vorhergehenden Ansprüche, wobei die Buchsenspindel (13) den Greifer oder Einspannmechanismus (5) aufnimmt und hält.

21. Führungsbuchse (9) für eine Drehbank, umfassend:
- eine Buchsenspindel (13),
- einen Greifer oder Einspannmechanismus (5) und
- eine Pinole (3) der Buchse, die die Buchsenspindel (13) und/oder den Greifer oder Einspannmechanismus (5) mindestens teilweise umgibt,
wobei die Führungsbuchse (9) dazu angeordnet ist, entweder im Buchsenmodus oder im Greifermodus zu wirken,
wobei die Pinole (3) der Buchse dazu angeordnet ist, über eine Verbindung mit einem Rahmen (1) einer Drehbank verbunden zu werden, die eine bezüglich einer Translations und Rotationsachse (14) eines zu bearbeitenden Teils, wenn dieses von der Führungsbuchse gehalten wird, im Wesentlichen axiale Translation der Pinole (3) der Buchse bezüglich des Rahmens (1) gestattet,
wobei die Buchsenspindel (13) und der Greifer oder Einspannmechanismus (5) bezüglich der Pinole (3), vorzugsweise axial bezüglich der Achse (14), entfernbar angeordnet sind,
wobei die Führungsbuchse (9) ferner einen Buchsenkörper (22) umfasst,
**dadurch gekennzeichnet, dass** der Buchsenkörper die Buchsenspindel (13) und den Greifer oder Einspannmechanismus (5) radial umhüllt und dass der Buchsenkörper (22) bezüglich der Pinole (3) axial bezüglich der Achse (14) entfernbar angeordnet ist.

22. Führungsbuchse nach Anspruch 21, wobei der Buchsenkörper (22) mittels einer Vielzahl von entfernbaren Befestigungselementen, die von der Seite der Bearbeitungszone zugänglich sind, mit der Pinole (3) verbunden ist.

## Claims

1. A lathe including:
- a moving headstock (2) designed to ensure the rotation and translation of a part (8) to be machined in relation to an axis (14) of translation and rotation,
- a guide bush (9) designed to be attached to a frame (1) of the lathe and including
* a bush spindle (13) and
* a gripper or a clamping mechanism (5),
the guide bush (9) being designed to operate either in bush mode or in grip mode,
**characterized in that**
- the guide bush (9) is designed to be moveable axially in relation to the frame along said axis (14),
- the lathe is designed to operate in a first mode in which the guide bush is driven axially by the moving headstock, and
- the lathe is designed to operate in a second mode in which the axial position of the guide bush is static in relation to the frame.

2. The lathe as claimed in the preceding claim, the lathe having a first coupling device,
- said first coupling device being engageable/disengageable and operating between the guide bush (9) and the moving headstock (2),
- said first coupling device being designed to axially couple the guide bush (3) and the moving headstock (2) along said axis (14).

3. The lathe as claimed in one of the preceding claims, the lathe having a second coupling device,
- said second coupling device being engageable/disengageable and operating between the guide bush (9) and the frame (1),
- said second coupling device being designed to axially set the position of the guide bush (3) in relation to the frame (1) along said axis (14).

4. The lathe as claimed in one of the preceding claims, in which the guide bush (9) includes a sheath (3) of the bush at least partially surrounding the bush spindle (13) and/or the gripper or clamping mechanism (5),
said sheath (3) of the bush being designed to be linked to the frame (1) by means of a link that enables an axial translational movement of said sheath (3) of the bush in relation to the frame (1).

5. The lathe as claimed in the preceding claim, said link including bearings (6) designed to enable said axial translational movement of the sheath (3) of the bush in relation to the frame (1).

6. The lathe as claimed in claims 2 and 4, an end portion (16) of the sheath being designed to radially surround an end portion (17) of the moving headstock, said first coupling device being designed to operate between said end portion (16) of the sheath of the bush and said end portion (17) of the moving headstock.

7. The lathe as claimed in the preceding claim, said first coupling device including a braking device (10) that is designed to operate radially on a surface (18) of said end (17) of the moving headstock such as to maintain an axial position of the moving headstock in relation to the sheath.

8. The lathe as claimed in claim 3, said second coupling device including a braking device (11) that is designed to operate radially on a surface of the sheath (3) of the bush such as to set an axial position of the sheath in relation to the frame.

9. The lathe as claimed in one of the preceding claims, the bush spindle (13) and the gripper or clamping mechanism (5) being linked to said sheath (3) of the bush by a pivoting link having an axis of rotation that is coaxial with said axis (14).

10. The lathe as claimed in the preceding claim, the pivoting link including roller bearings, notably ball bearings (12).

11. The lathe as claimed in one of the preceding claims, including a third coupling device designed to operate between the guide bush (9) and the moving headstock (2), and
said third coupling device being designed to transmit a rotation of a rotary part (202) of the moving headstock (2) to the gripper or clamping mechanism (5) of the bush and/or to the bush spindle (13).

12. The lathe as claimed in the preceding claim, said third coupling device being engageable/disengageable.

13. The lathe as claimed in claim 11 or 12, an end portion (20) of the bush spindle (13) being designed to radially surround an end portion (19) of said rotary part (202) of the moving headstock,
said third coupling device including a protuberance (7) that cooperates with an axial slot (21),
- the end portion (20) of the bush spindle (13) including one of either said protuberance (7) or said axial slot (21), and
- said end portion (19) of said rotary part (202) of the moving headstock (2) including the other of said protuberance (7) and said axial slot (21).

14. The lathe as claimed in one of claims 11 to 13, said moving headstock (2) being motorized.

15. The lathe as claimed in one of the preceding claims, the guide bush (9) being motorized.

16. The lathe as claimed in one of the preceding claims, the bush spindle (13) and the gripper or clamping mechanism (5) being designed to be axially detachable from the frame (1) and/or the sheath (3) of the bush.

17. The lathe as claimed in the preceding claim, the guide bush (9) including a bush body (22), said bush body radially enveloping the bush spindle (13) and the gripper or clamping mechanism (5), and said bush body (22) being designed to be axially detachable from the frame (1) and/or the sheath (3) of the bush.

18. The lathe as claimed in claim 16, the whole of the guide bush (9) being designed to be axially detachable from the frame (1).

19. The lathe as claimed in one of claims 16 to 18, the whole of the bush (3) or the bush body (22) or the bush spindle (13) and the gripper or clamping mechanism (5) being designed to be detachable from the side of the frame (1) close to the machining zone.

20. The lathe as claimed in one of the preceding claims, the bush spindle (13) receiving and holding said gripper or clamping mechanism (5).

21. A guide bush (9) for a lathe including:
- a bush spindle (13),
- a gripper or clamping mechanism (5), and
- a sheath (3) of the bush at least partially surrounding the bush spindle (13) and/or the gripper or clamping mechanism (5),
the guide bush (9) being designed to operate either in bush mode or in grip mode,
said sheath (3) of the bush being designed to be linked to a frame (1) of a lathe by a link enabling a translational movement of said sheath (3) of the bush in relation to said frame (1) that is substantially axial in relation to an axis (14) of translation and rotation of a part to be machined when same is held by said guide bush,
the bush spindle (13) and the gripper or clamping mechanism (5) being designed to be detachable from said sheath (3), preferably axially in relation to said axis (14),
said guide bush (9) including a bush body (22),
**characterized in that**
said bush body radially envelops the bush spindle (13) and the gripper or clamping mechanism (5), and **in that** said bush body (22) is designed to be detachable in relation to said sheath (3), axially in relation to said axis (14).

22. The guide bush according to claim 21, wherein said bush body (22) is connected to said sleeve (3) through a plurality of removable fastening elements which are accessible from the side of the machining zone.
